Europäisches Patentamt

European Patent Office

Office européen des brevets

(19)

(11) Veröffentlichungsnummer: **0 187 213**
**B1**

(12)                 EUROPÄISCHE PATENTSCHRIFT

(45) Veröffentlichungstag der Patentschrift: 01.08.90

(51) Int. Cl.⁵: **A 61 C 13/265**

(21) Anmeldenummer: **85113824.8**

(22) Anmeldetag: **30.10.85**

(54) Geschiebe.

(30) Priorität: **04.12.84 DE 3444165**

(43) Veröffentlichungstag der Anmeldung:
**16.07.86 Patentblatt 86/29**

(45) Bekanntmachung des Hinweises auf die
Patenterteilung:
**01.08.90 Patentblatt 90/31**

(84) Benannte Vertragsstaaten:
**AT BE CH DE FR GB IT LI LU NL SE**

(56) Entgegenhaltungen:
**EP-A-0 085 781**
**DE-A-3 301 182**
**DE-B-1 928 150**
**DE-C-3 444 165**
**DE-U-1 808 398**

(73) Patentinhaber: **Michael Böhmländer GmbH**
**Hersbruckerstrasse 29**
**D-8503 Altdorf (DE)**

(72) Erfinder: **Böhmländer, Michael**
**Hersbruckerstrasse 29**
**D-8503 Altdorf (DE)**

(74) Vertreter: **Rau, Manfred, Dr. Dipl.-Ing. et al**
**Rau & Schneck, Patentanwälte Königstrasse 2**
**D-8500 Nürnberg 1 (DE)**

Courier Press, Leamington Spa, England.

**Beschreibung**

Die Erfindung richtet sich auf ein Geschiebe nach dem Oberbegriff von Anspruch 1.

Derartige Geschiebe dienen zur Verbindung einer Zahnprothese mit einem Zahn, auf welchen z.B. eine Krone aufgesetzt ist. Ein derartiges Geschiebe umfaßt üblicherweise eine mit der Prothese zu verbindende Patrize und eine mit dem Zahn zu verbindende, z.B. in der Krone ausgebildete Matrize.

Ein wesentlicher, weil zeitaufwendiger und qualitätsbestimmender Arbeitsgang bei der Herstellung einer Prothese besteht in der Befestigung der Patrize an derselben. Hierzu ist es bekannt, die Patrize an der Zahnprothese anzugießen. Eine weitere Möglichkeit besteht darin, an der Prothese ein Gehäuse zur Befestigung des Patrizenkörpers anzulöten. Diese vorbekannten Techniken weisen aber den Nachteil auf, daß sie zeitaufwendig sind, keine leicht reservible Befestigung der Patrize an der Prothese ermöglichen, und daß häufig keine befriedigende Maßhaltigkeit erreicht wird. Lötverbindungen weisen darüber hinaus den grundsätzlichen Nachteil auf, daß sie sich bei nachfolgenden Arbeitsvorgängen unter hoher Temperatur wieder lösen können.

Ein erster Schritt zur Überwindung der vorstehend angesprochenen Probleme wurde gemäß der EP—A—85 781 gemacht. Dort ist vorgesehen, daß an die Prothese einstückig mit dieser ein Gehäuse angeformt und die Patrize in diesem Gehäuse durch eine Feststelleinrichtung lösbar festgelegt wird. Insbesondere im Hinblick auf die gewählte Gehäuseform ist es bei einem Vorgehen gemäß dieser Druckschrift jedoch erforderlich, zur Erstellung des Gehäuses einen sogenannten Gehäuseformer zu modellieren, der eine Sekundärpatrize trägt. Dieser Gehäuseformer mit der Sekundärpatrize entspricht in der Form der Patrize mit deren zugehörigem Verankerungsteil. Bei der Herstellung einer derartigen Prothese geht man so vor, daß um einen derartigen Gehäuseformer herum ein Wachsgehäuse zur Aufnahme des Verankerungsteils der Geschiebepatrize modelliert wird. Diese Wachsgehäuse wird gemeinsam mit einem Prothesenskelett einheitlich hergestellt. Dieses Modell wird gemeinsam mit der Sekundärpatrize aus hitzebeständiger Keramik in einem Ofen erhitzt, wobei das Wachs ausfließt und die Sekundärpatrize in der Einbettmasse zurückbleibt. In den so gebildeten Hohlraum wird wieder eine Metall-Legierung eingegossen, wobei die Prothese mit angeformtem Gehäuse entsteht. Allerdings befindet sich in dem Gehäuse noch der Gehäuseformer aus Keramik und muß nun erst mittels eines Sandstrahlgebläses ausgeblasen oder durch Säure ausgelöst werden. Ebenfalls müssen die Verankerungsteile auf diese Weise ausgelöst werden. Ein derartiges Vorgehen erfordert also die Verwendung einer Silikon-Dubliermasse, eine speziell geeignete Einbettmasse und ein Sandstrahlgerät mit feinem Strahlsand. Neben dem entsprechenden Herstellungsaufwand weist das in Betracht stehende Vorgehen auch noch den Nachteil auf, daß es zu Schrägstellungen der Patrize und damit zu einem schlechten Sitz der Prothese kommen kann. Letztlich ist auch die Ausbildung der Befestigungseinrichtung zur Festlegung der Patrize im Gehäuse noch nicht zufriedenstellend.

Hiervon ausgehend liegt der Erfindung die Aufgabe zugrunde, ein Geschiebe der in Betracht stehenden Art zu schaffen, bei welchem die Patrize mit verhältnismäßig geringem Arbeitsaufwand an der Prothese leicht lösbar und trotzdem unter exakter Ausrichtung befestigt werden kann.

Diese Aufgabe wird erfindungsgemäß gelöst entsprechend dem kennzeichnenden Teil von Anspruch 1. Die erfindungsgemäß vorgesehenen korrespondierenden Vorsprünge bzw. Hinterschneidungen an der Gehäuseinnenwand bzw. an dem Verankerungsteil stellen eine Festlegung des Verankerungsteils in dem Gehäuse in einer Richtung senkrecht zur Längserstreckung der Prothese sicher, ohne daß deswegen das Gehäuse in dieser Richtung vollkommen geschlossen ausgebildet werden muß. Vielmehr ist das Gehäuse dennoch in einer Richtung senkrecht zur Einschubrichtung des Verankerungsteils in das Gehäuse, d.h. also in einer Richtung parallel zur Einschubrichtung der Patrize in die Matrize, offen, was es wiederum möglich macht, in dieser Richtung eine Befestigungsschraube vorzusehen, welche das Verankerungsteil gegen das Gehäuse verspannt. Hierdurch wird bei exakter Ausrichtung eine sehr einfache und trotzdem haltbare Verbindung zwischen Patrize und Prothese erreicht. Zudem wird der Herstellungsvorgang erleichtert, weil nicht ein Platzhalter aus Keramik verwendet zu werden braucht, der später mit großem Arbeitsaufwand wieder entfernt werden muß, sondern weil die tatsächlich verwendete Patrize mit Wachs an einem Prothesenmodell befestigt werden kann. Anschließend kann dann mit einem elastischen Dubliergel und einer herkömmlichen Einbettmasse weitergearbeitet werden, da keine Silikon-Dubliermasse verwendet werden muß.

Aus dem Vorstehenden wird deutlich, daß sich durch die Verwendung eines senkrecht zur Einschubrichtung offenen Gehäuses wesentliche herstellungstechnische Vorteile ergeben.

Unteranspruch 2 gibt eine bevorzugte Ausgestaltungen der Formgebung der Rückwand der Gehäuseinnenseite. Durch die im Querschnitt kreisabschnittsförmige Außenform wird erreicht, daß die entsprechenden Gußteile sich durch rotierende Bearbeitungswerkzeuge, wie z.B. Bohrer oder Schleifgeräte, leicht nacharbeiten lassen. Hierin liegt ein weiterer Grund, warum ein erfindungsgemäßes Vorgehen die Verwendung von platzhaltenden Gehäuseformen und die Durchführung der damit verbundenen zusätzlichen Arbeitsgänge entbehrlich macht.

Nachfolgend wird eine bevorzugte Ausführungsform anhand der Zeichnung näher beschrieben. Dabei zeigen

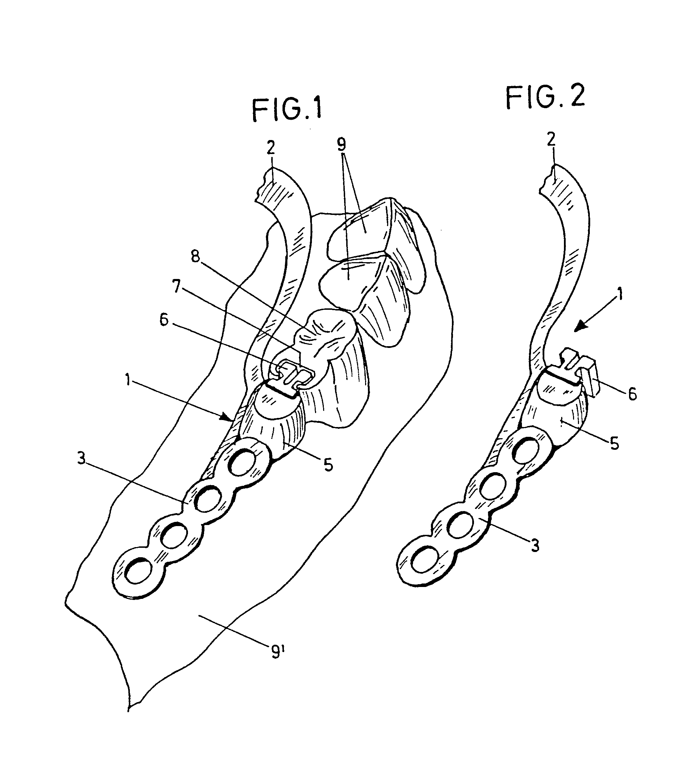

Fig. 1 eine perspektivische Ansicht eines Kieferteils Sublingualbügel-Prothese,

Fig. 2 eine entsprechende perspektivische Ansicht der herausgenommenen Prothese,

Fig. 3 eine Explosionsdarstellung des einstückig mit der Prothese ausgebildeten Gehäuses und der Patrize mit Verankerungsteil,

Fig. 4 einen Schnitt längs der Linie IV—IV in Fig. 3,

Fig. 5 eine Seitenansicht, gesehen in Richtung des Pfeils V in Fig. 3,

Fig. 6 eine Aufsicht, gesehen in Richtung des Pfeils VI in Fig. 3, und

Fig. 7 eine Seitenansicht, gesehen in Richtung des Pfeils VII in Fig. 3.

Eine in der Zeichnung dargestellte Prothese 1 umfaßt einen Sublingualbügel 2 und eine Stahlplatte 3 sowie einen ein Gehäuse 4 umschließenden Gehäusekörper 5. An dem Gehäusekörper 5 ist eine Patrize 6 befestigt, welche in eine Matrize 7 eingreift, welche im Beispiel in einer Krone 8 ausgebildet ist, mit welcher der letzte Zahn der in Betracht stehenden Reihe von Zähnen 9 des Unterkiefers 9' überzogen ist.

Wenngleich im Zusammenhang mit der Beschreibung der Erfindung stets davon ausgegangen wurde, daß die Patrize in an sich üblicher Weise an der Prothese angeordnet ist, läßt sich die Erfindung in äquivalenter Weise auch dann realisieren, wenn die Patrize an der Krone angeordnet und die Matrize in der Prothese ausgebildet wird.

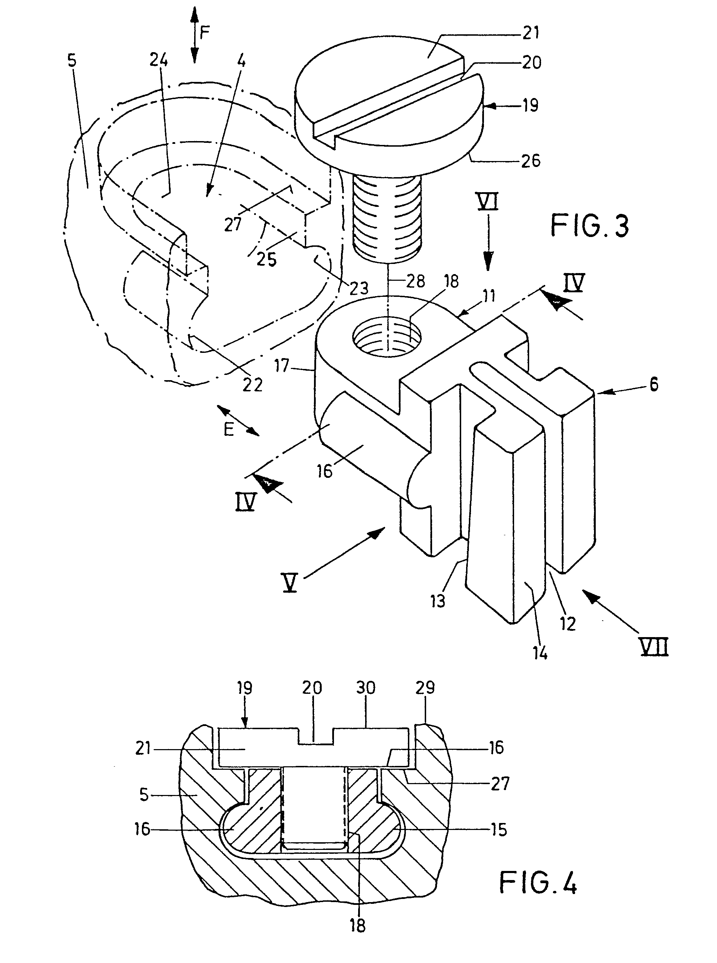

Wie insbesondere aus Fig. 3 ersichtlich ist, ist die Patrize 6 mit einem Verankerungsteil 11, auch Retentionsteil genannt, versehen.

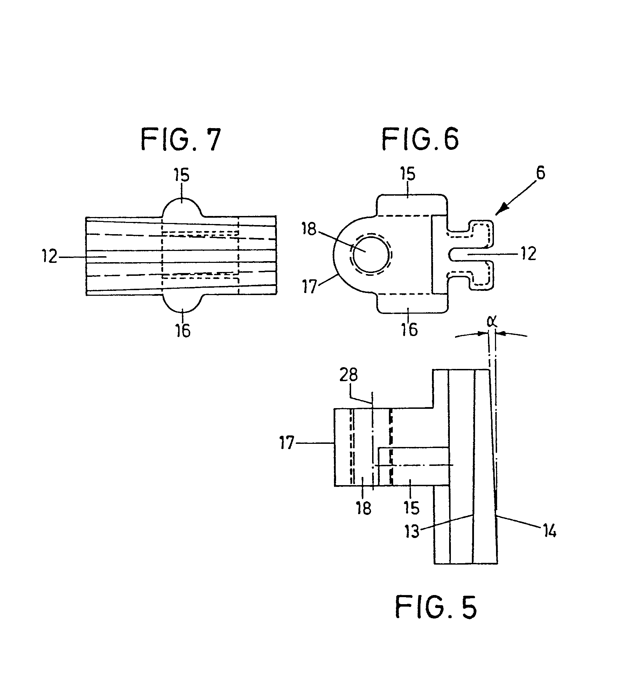

Die Patrize ist in an sich bekannter Weise ausgebildet, d.h. sie weist eine Nut 12 und leicht schräg gestellte Begrenzungsflächen 13, 14 auf (vgl. Fig. 5), um beim Einsetzen in die Matrize einen gewissen Selbstverankerungs- oder Verkeilungseffekt zu erzielen.

Das Verankerungsteil 11 umfaßt zwei zylindersegmentförmige, seitliche, wulstartige Vorsprünge 15, 16, deren Längsachse etwa in Richtung der Längserstreckung der Stahlplatte 3 verläuft. Das der Patrize 6 abgewandte Ende 17 des Verankerungsteils 11 ist ebenfalls zylindersegmentförmig ausgebildet, wobei die zugehörige Zylinderachse senkrecht zur Längsrichtung der Vorsprünge 15, 16 steht. Dieses Ende ist mit einer Gewindebohrung 18 versehen, welche ebenfalls senkrecht zur Längsrichtung der Vorsprünge 15, 16 verläuft. In diese Gewindebohrung ist eine Schraube 19 einsetzbar, welche einen mit einem Schlitz 20 versehenen Kopf 21 aufweist.

Das Gehäuse 4 im Gehäusekörper 5 an der Prothese 1 ist korrespondierend zum Verankerungsteil 11 ausgebildet. Dementsprechend weist das Gehäuse 4 seitliche Hinterschneidungen 22, 23 auf, deren Form und Erstreckung derjenigen der Vorsprünge 15, 16 entspricht. Die Rückwand 24 des Gehäuses 4 ist zylindersegmentförmig korrespondierend dem Ende 17 des Verankerungsteils 11 ausgebildet. Oberhalb der Hinterschneidungen 22, 23 ist ein umlaufender Kragen 25 ausgebildet.

Zur Befestigung der Patrize 6 an der Prothese 1 wird das Verankerungsteil 11 in Einschubrichtung E, also parallel zu den Längsachsen der Vorsprünge 15, 16 bzw. der Hinterschneidungen 22, 23 in das Gehäuse 4 bis zum Anschlag eingeschoben. Es wird dann die Schraube 19 in der Gewindebohrung 18 festgeschraubt. Es kommt dann im angezogenen Zustand dazu, daß die Unterseite 26 der Schraube 19 zur Anlage an der Oberseite 27 des Kragens 25 gelangt. Hierdurch werden die Vorsprünge 15, 16 in Richtung F, also parallel zur Längsachse 28 der Schraube 19 bzw. der Gewindebohrung 18, gegen die Hinterschneidungen 22, 23 verspannt und dementsprechend wird eine sichere Verbindung zwischen Prothese 1 und Patrize 6 erreicht. Da die Oberseite 27 gegenüber der Oberkante 29 des Gehäusekörpers 5 etwa entsprechend der Dicke des Schrauben-Kopfes 21 vertieft angeordnet ist, schließt die Oberseite 30 des Schraubenkopfes 21 im angezogenen Zustand mit der Oberkante 29 des Gehäusekörpers 5 weitgehend bündig ab.

In der gleichen einfachen Weise, wie vorstehend beschrieben, lediglich in umgekehrter Abfolge, kann die Verbindung zwischen Patrize 6 und Prothese 1 gelöst werden.

Das Gehäuse 4 bzw. der Gehäusekörper 5 werden mit der Stahlplatte 3 in einem einzigen Arbeitsdurchgang hergestellt, d.h. für die Herstellung des Gehäuses 4 sind gegenüber der ohnehin erforderlichen Herstellung der Stahlplatte 3 praktisch keine zusätzlichen Arbeitsgänge erforderlich. Das Nacharbeiten des in einem Guß mit der Stahlplatte 3 hergestellten Gehäuses 4 gestaltet sich aufgrund der erfindungsgemäßen Formgebung besonders einfach und macht die Erfindung wirklich praxisgerecht. So können die seitlichen Hinterschneidungen 22, 23 mit einem sogenannten Rosenbohrer und der Kragen 25 und der Bereich oberhalb desselben mit einem Stufenbohrer problemlos nachgearbeitet werden. Hierbei handelt es sich um Werkzeuge, welche in einem Dental-Labor grundsätzlich vorhanden sind, so daß für die Erstellung eines erfindungsgemäßen Gehäuses 4 keine zusätzliche Ausstattung an Werkzeugen, wie z.B. Sandstrahlgebläse mit besonderer Korundgröße, oder an Dublier- oder Einbettmassen, wie z.B. eine Silikon-Dubliermasse, erforderlich ist.

## Patentansprüche

1. Geschiebe mit einer Zahnprothese umfassend eine Patrize und eine Matrize zur Herstellung einer lösbaren Verbindung zwischen der der Patrize zugeordneten Zahnprothese und einem die Matrize tragenden Pfeilerzahn, wobei an der Zahnprothese ein mit dieser einstückig ausbildbares Gehäuse zur lösbaren Befestigung eines Verankerungsteils der Patrize mittels einer Befestigungseinrichtung angeordnet ist, wobei das Verankerungsteil von einer offenen Außenseite des Gehäuses her in dieses einschiebbar ist, wobei das Verankerungsteil und das Gehäuse formschlüssig ineinandergreifen, und wobei die Befestigungseinrichtung eine in einer zur Einschubrichtung senkrechten Richtung verlaufende Gewindebohrung in dem Verankerungsteil und eine in diese einsetzbare, sich an dem Gehäuse abstützende Schraube umfaßt, dadurch gekennzeichnet, daß das Gehäuse (4) in einer zur Einschubrichtung (E) senkrechten Richtung (F) offen ist,

daß in dem Gehäuse (4) zwei parallel zur Einschubrichtung (E) verlaufende, wulstartige Hinterschneidungen (22, 23) und an dem Verankerungsteil (1) zwei korrespondierende wulstartige Vorsprünge (15, 16) angeordnet sind,

daß das Gewinde (18) senkrecht zur Einschubrichtung (E) von der offenen Seite des Gehäuses (4) her im Verankerungsteil (11) verläuft, und

daß die Schraube (19) von der offenen Seite des Gehäuses (4) her eingesetzt ist und das Verankerungsteil (11) gegen das Gehäuse (4) verspannt.

2. Geschiebe nach Anspruch 1, dadurch gekennzeichnet, daß die Rückwand (24) des Gehäuses (4) zylindermantelsegmentförmig ausgebildet ist.

**Revendications**

1. Attache coulissante avec une prothèse dentaire, comprenant une partie mâle et une partie femelle destinées à réaliser une liaison démontable entre la prothèse dentaire associée à la partie mâle et une dent sur pivot portant la partie femelle, un corps de logement étant constitué sur la prothèse dentaire et pouvant être formé d'une seule pièce avec elle, ce corps étant destiné à la fixation démontable d'un élément d'ancrage de la partie mâle au moyen d'un dispositif de fixation, l'élément d'ancrage pouvant être inséré par coulissement dans le corps de logement par une de ses faces qui est ouverte, l'élément d'ancrage et le corps de logement s'engageant mutuellement l'un dans l'ordre par complémentarité de formes, et le dispositif de fixation englobant un trou taraudé réalisé dans la pièce d'ancrage et s'étendant perpendiculairement à la direction d'engagement, ainsi qu'une vis pouvant s'engager dans ce taraudage et prenant appui sur le corps de logement, attache coulissante caractérisée en ce que le corps de logement (4) est ouvert dans une direction (F) perpendiculaire à la direction d'engagement (E), en ce que dans le corps de logement (4) sont agencés deux chambrages en forme de bourrelet (22, 23) s'étendant parallèlement à la direction d'engagement (E), tandis que sur l'élément d'ancrage (11) sont constitués deux protubérances correspondantes (15, 16) en forme de bourrelet, en ce que le taraudage (18) s'étend dans l'élément d'ancrage (11), perpendiculairement à la direction d'engagement (E) et à partir du côté ouvert du corps de logement (4), et en ce que la vis (19) est mise en place à partir du côté ouvert du corps de logement (4), en provoquant le serrage de l'élément d'ancrage contre le corps de logement (4).

2. Attache coulissante selon la revendication 1, caractérisée en ce que la paroi arrière (24) du corps de logement (4) présente une forme de secteur d'enveloppe cylindrique.

**Claims**

1. Dental attachment with a dental prosthesis comprising a male and a female piece to produce a releasable joining of the dental prosthesis associated to the male piece and a post-tooth carrying the female piece, wherein a housing is provided on and integrally formed with the dental prosthesis for releasably fastening an anchoring portion of the male piece by means of a fastening device, wherein the anchoring portion is insertable into the housing from an open external side of the housing, wherein the anchoring portion and the housing nest fittingly one inside the other, and wherein the fastening device includes a threaded bore extending in a direction at right angles to the insertion direction in the anchoring portion and a screw which is insertable into the bore and is supported on the housing, characterized in that the housing (4) is open in a direction (F) at right angles to the insertion direction (E),

that two bead-shaped recesses (22, 23) extending parallel to the insertion direction (E) are disposed in the housing (4), and two corresponding bead-like protrusions (15, 16) are disposed on the anchoring portion (11),

that the thread (18) extends in a direction at right angles to the insertion direction (E) from the open side of the housing (4) in the anchoring portion (11), and

that the screw (19) is inserted from the open side of the housing (4) and clamps the anchoring portion (11) against the housing (4).

2. Dental attachment according to patent claim 1, characterized in that the back wall (24) of the housing (4) is in the shape of a cylindrical jacket segment.

FIG.1

FIG.2

FIG.3

FIG.4

2

# FIG. 7

15

12

16

# FIG. 6

15

6

18

12

17

16

# FIG. 5

α

28

17

18    15

13

14